# EUROPÄISCHE PATENTSCHRIFT

(11) **EP 4 058 638 B1**
(45) Veröffentlichungstag und Bekanntmachung des Hinweises auf die Patenterteilung: **31.05.2023**
(21) Anmeldenummer: 20816152.1
(22) Anmeldetag: 26.11.2020
(51) Int. Cl.: E03C 1/04, F16L 33/207

(54) **SANITÄRARMATUR**
SANITARY FITTING
ROBINETTERIE SANITAIRE

(30) Priorität: 29.11.2019 DE 202019106666 U
(43) Veröffentlichungstag der Anmeldung: 21.09.2022
(73) Patentinhaber: Neoperl GmbH, 79379 Müllheim (DE)
(72) Erfinder: KURY, Werner, 79379 Müllheim (DE)
(74) Vertreter: Mertzlufft-Paufler, Cornelius
(86) Internationale Anmeldenummer: PCT/EP2020/083542
(87) Internationale Veröffentlichungsnummer: WO 2021/105302

(56) Entgegenhaltungen:
- EP-A1- 1 496 164
- EP-A1- 2 995 838
- EP-A2- 1 435 480
- EP-A2- 1 457 607
- EP-A2- 1 798 348
- WO-A1-2009/065435
- WO-A1-2019/002515
- CN-U- 209 041 741
- DE-U1-202017 100 423

## Beschreibung

Die Erfindung betrifft eine Sanitärarmatur mit einem Armaturengehäuse, das einen Gehäuse-Innenraum hat, in den eine Kartusche oder ein Kartuschenadapter mit einer, in einer Kartuschenaufnahme des Kartuschenadapters vorgesehenen Kartusche eingesetzt ist,
welche Kartusche wenigstens eine Zulauföffnung hat, die zum Durchführen mindestens eines Fluids durch die Kartusche mit zumindest einer Auslauföffnung verbunden ist,
sowie mit wenigstens einer Schlauchleitung zum Heranführen des mindestens einen Fluids an die Kartusche, welche Schlauchleitung zumindest an ihrem der Kartusche zugewandten Schlauchende ein Schlauchanschlusselement aufweist.

Sanitäre Auslaufarmaturen dienen dazu, das an einer Entnahmestelle benötigte Fluid in der gewünschten Qualität und Menge bereitzustellen. Die vorbekannten Sanitärarmaturen weisen dazu ein Armaturengehäuse auf, das beispielsweise an einem als Entnahmestelle dienenden Waschbecken montiert sein kann. Das Armaturengehäuse hat einen Gehäuse-Innenraum, in den eine Kartusche eingesetzt ist, mit deren Hilfe sich die Wassermenge oder auch die Temperatur des aus dem Armaturenauslauf der Auslaufarmatur ausströmenden Wassers einregeln lässt. In den vorbekannten Kartuschen sind keramische Scheiben als Absperrelement eingesetzt. Diese keramischen Scheiben drehen sich gegeneinander und verschieben sich und geben stufenlos den Wasserfluss frei. Die Stellung des Hebels der Einhebel-Armatur, die einer bestimmten Relativposition der Scheiben zueinander entspricht, gibt den Öffnungsgrad der Kartusche an.

So kennt man bereits Sanitärarmaturen der eingangs erwähnten Art, die ein als Hohlkörper ausgebildetes Armaturengehäuse aufweisen. Das Armaturengehäuse weist einen Gehäuse-Innenraum auf, in den entweder eine Kartusche oder aber ein Kartuschenadapter ieingesetzt ist, welcher Kartuschenadapter eine, in einer Kartuschenaufnahme des Kartuschenadapters vorgesehene Kartusche enthält. Da die die Ventilscheiben aufweisende Kartusche als standardisiertes Bauteil hergestellt wird, ist mit Hilfe des Kartuschenadapters eine Anpassung der Sanitärarmatur an die standardisierte Kartusche möglich. In jedem Fall weist die Kartusche wenigstens eine Zulauföffnung auf, die zum Durchführen mindestens eines Fluids durch die Kartusche mit zumindest einer Auslauföffnung verbunden ist. In das Gehäuseinnere des Armaturengehäuses ist wenigstens eine Schlauchleitung geführt, die zum Heranführen des mindestens einen Fluids an die Kartusche dient. Diese Schlauchleitung weist zumindest an ihrem der Kartusche zugewandten Schlauchende ein Schlauchanschlusselement auf. Über die Schlauchleitung und dessen Schlauchanschlusselement ist durch die Kartusche wenigstens ein Fluid, insbesondere Kalt- und/oder Warmwasser, von mindestens einer Zulauföffnung der Kartusche zu wenigstens einer Auslauföffnung durchführbar, wobei die Menge oder zumindest eine Eigenschaft des Fluids, beispielsweise dessen Temperatur, in der Kartusche eingeregelt werden kann.

Dabei wird das wenigstens eine Fluid über die mindestens eine Schlauchleitung an die Kartusche der vorbekannten Sanitärarmatur herangeführt. Diese Schlauchleitung liegt mit einem Schlauchfitting oder dergleichen Schlauchanschlusselement der Schlauchleitung am Kartuschenadapter derart an, dass das in der zumindest einen Schlauchleitung geführte Fluid über das Schlauchanschlusselement und den Kartuschenadapter in die Kartusche geleitet werden kann. Im Gehäuse-Innenraum des Armaturengehäuses steht dazu zumindest ein Schlauchhalter vor, der an den Gehäuseinnenumfang des Armaturengehäuses angeformt ist. Dieser zumindest eine Schlauchhalter wird von wenigstens einer Einführöffnung durchsetzt, durch welche wenigstens eine Einführöffnung jeweils eine Schlauchleitung einführbar ist. Am Umfang des Schlauchanschlusselements ist eine umlaufende Haltenut vorgesehen, die nach dem Einfädeln der Schlauchleitung in die Einführöffnung ein Sprengring, ein Halteclip oder dergleichen Axialsicherung einsetzbar ist. Diese Axialsicherung sichert die Schlauchleitung und deren Schlauchanschlusselement gegen ein Herausziehen aus der Einführöffnung. Das Schlauchanschlusselement der zumindest einen Schlauchleitung liegt am Kartuschenadapter im Bereich der Kanalzulauföffnung eines Durchströmkanals an, welcher Durchströmkanal zu einer Zulauföffnung der Kartusche führt. Das Einarbeiten der Einführöffnungen in das Armaturengehäuse, und das Abdichten zwischen dem Schlauchanschlusselement und dem Kartuschenadapter sowie zwischen dem Kartuschenadapter und der Kartusche ist mit einem erheblichen Aufwand verbunden.

Aus WO 2009/065435 A1 ist ein Schlauchbefestigungselement für eine Sanitär- oder Küchenarmatur mit wenigstens zwei Einführkanälen, die sich jeweils bis zu wenigstens einer Aufnahmeposition erstrecken, an der ein Bund eines Schlauchnippels an einem Anschlussschlauch axial festlegbar ist, wobei das Schlauchbefestigungselement eine innenliegende Ausnehmung aufweist, die aus einem Zuführbereich und den Einführkanälen gebildet ist, wobei die Einführkanäle in einen Winkel zueinander abgestellt sind und in dem gemeinsamen Zuführbereich münden, bekannt.

Aus EP 1 457 607 A2 ist eine Einrichtung zum Befestigen einer Leitung bekannt, wobei die Einrichtung zum Befestigen des Endes einer Leitung an einer Sanitärarmatur in der Sanitärarmatur eine Aufnahme für einen Nippel enthält, der in diese Aufnahme eingeschoben werden kann.

Aus DE 20 2017 100 423 U1 ist eine Schlauchanschlussanordnung mit einem Grundkörper, an welchem wenigstens zwei Schlauchaufnahmen ausgebildet sind, mit wenigstens zwei Schläuchen, die mit ihren jeweiligen Enden in jeweils eine der wenigstens zwei Schlauchaufnahmen gesteckt sind, wobei an jedem der wenigstens zwei Schläuche eine Haltekante ausgebildet ist, mit einer Halteplatten, in welcher korrespondierend zu den wenigstens zwei Schlauchaufnahmen wenigstens zwei Ausnehmungen ausgebildet sind, in welche jeweils einer der wenigstens zwei Schläuche durch eine quer zu einer Längsrichtung des jeweiligen Schlauches ausgerichteten Einsetzbewegung einsetzbar ist, sodass die zugehörige Haltekante die Halteplatten übergreift, um ein Abziehen der Schläuche aus den Schlauchaufnahmen zu verhindern, bekannt.

Aus EP 1 435 480 A2 ist eine Sanitärarmatur bekannt, die in ihrem Sockel ein Adapterbauteil enthält, dass einen Durchgangskanal für eine zu einem Mischventil in der Sanitärarmatur führende Wasserführung enthält.

Aus WO 2019/002515 A1 sind ein Chromatographiesystem und Kupplungen dafür bekannt.

Aus EP 1 798 348 A2 ist eine Mischbatterie bekannt, die einen Batteriekörper aufweist, an dem ein Wasserauslaufrohr angeordnet ist, wobei im Batteriekörper ein Aufnahmeraum für ein Einsatzstück mit einer Mischventilkartusche vorgesehen ist.

Aus EP 1 496 164 A1 ist eine formschlüssige Verbindung eines Anschlussstücks einer Rohrleitung bekannt.

Es besteht daher die Aufgabe, eine Sanitärarmatur der eingangs erwähnten Art zu schaffen, deren Herstellung mit einem erheblich geringeren Aufwand verbunden ist.

Eine erfindungsgemäße Lösung dieser Aufgabe besteht bei der Sanitärarmatur der eingangs erwähnten Art insbesondere darin, dass das Schlauchanschlusselement der zumindest einen Schlauchleitung in einer Halteposition an der Kartusche oder am Kartuschenadapter gegen ein Abziehen der Schlauchleitung gesichert gehalten ist, und mit seinem eine Schlauchöffnung umgrenzenden freien Stirnende an dem die zugeordnete Zulauföffnung umgrenzenden Randbereich der Kartuscheanliegt. Die erfindungsgemäße Sanitärarmatur weist ein Armaturengehäuse auf, das einen Gehäuse-Innenraum hat. In dem Gehäuse-Innenraum des Armaturengehäuses ist entweder eine Kartusche oder ein Kartuschenadapter eingesetzt, in dem in einer Kartuschenaufnahme eine Kartusche vorgesehen ist. Die Kartuschenaufnahme des Kartuschenadapters ist zum Einsetzen einer Ventil-, Misch- oder dergleichen Kartusche bestimmt. Die Kartusche weist wenigstens eine Zulauföffnung auf, die zum Durchführen mindestens eines Fluids durch die Kartusche mit zumindest einer Auslauföffnung verbunden ist. Mit Hilfe der Kartusche kann das gewünschte Fluid ausgewählt, die benötigte Menge eingeregelt und/oder dessen Temperatur oder dergleichen Fluideigenschaften, beispielsweise durch Zumischen von Kalt- und Warmwasser, bestimmt werden. Dabei wird das wenigstens eine Fluid, das beispielsweise Warmwasser, Kaltwasser, kochend heißes Wasser oder auch karbonisiertes, d.h. mit CO2-versetztes Wasser sein kann, jeweils mittels einer Schlauchleitung an die Kartusche herangeführt. Um das von der zumindest einen Schlauchleitung kommende Fluid an die Kartusche heranzuführen, ist das Schlauchanschlusselement der zumindest einen Schlauchleitung in einer Halteposition an der Kartusche oder am Kartuschenadapter gegen ein Abziehen der Schlauchleitung gesichert gehalten. Dabei liegt das Schlauchanschlusselement mit seinem eine Schlauchöffnung umgrenzenden freien Stirnende an dem die zugeordnete Zulauföffnung umgrenzenden Randbereich der Kartusche flüssigkeitsdicht an. Da das Schlauchanschlusselement der mindestens einen Schlauchleitung gegen ein Abziehen der Schlauchleitung in der Halteposition gesichert an der Kartusche oder am Kartuschenadapter gehalten ist, lässt sich das Schlauchanschlusselement nicht unbeabsichtigt von der Kartusche oder dem Kartuschenadapter abziehen. Bei der erfindungsgemäßen Sanitärarmatur ist also die Schlauchleitung mit ihrem Schlauchanschlusselement an der Kartusche oder am Kartuschenadapter und nicht am Armaturengehäuse gehalten. Damit ist bereits die Herstellung des Armaturengehäuses vereinfacht. Da die zumindest eine Schlauchleitung mit dem eine Schlauchöffnung umgrenzenden freien Stirnende ihres Schlauchanschlusselements an dem eine Zulauföffnung umgrenzenden Randbereich der Kartusche flüssigkeitsdicht anliegt, kann auf eine weitere Ringdichtung zwischen der Schlauchleitung und dem Kartuschenadapter verzichtet werden, was den Herstellungsaufwand reduziert. Sofern die erfindungsgemäße Sanitärarmatur überhaupt einen Kartuschenadapter benötigt, wird dieser Kartuschenadapter von der Schlauchleitung lediglich durchsetzt und im Kartuschenadapter sind keine langen und gegebenenfalls auch sich kreuzenden Durchströmkanäle vorzusehen. Da die zumindest eine Schlauchleitung flüssigkeitsdicht an der Kartusche anliegt, kann der Kartuschenadapter mit einer reduzierten Einbaulänge ausgestaltet oder auf den Kartuschenadapter gänzlich verzichtet werden, was eine Materialersparnis sowohl beim Kartuschenadapter als auch bei dem den Kartuschenadapter oder die Kartusche aufnehmenden Armaturengehäuse mit sich bringt.

Eine besonders vorteilhafte Weiterbildung gemäß der Erfindung sieht vor, dass am Kartuschenadapter oder an der Kartusche eine Durchgriffsöffnung vorgesehen ist, dass in der Durchgriffsöffnung ein Einsteckschlitz mündet, der quer zur Längsachse des Kartuschenadapters oder der Kartusche hin an einer Einstecköffnung offen ausgebildet ist, dass der zumindest einen Durchgriffsöffnung eine Schlauchanschlusselement-Aufnahme zugeordnet ist, und dass die einen die Durchgriffsöffnung begrenzenden Aufnahme-Absatz oder eine Aufnahmeschräge aufweist, und dass die der Durchgriffsöffnung zugeordnete Schlauchleitung durch die Einstecköffnung hindurch über den Einsteckschlitz in die Durchgriffsöffnung derart einführbar ist, dass das Schlauchanschlusselement mit einer Querschnittserweiterung gegen ein Abziehen der Schlauchleitung gesichert am Aufnahme-Absatz oder an der Aufnahmeschräge anliegt. Um also die zumindest eine Schlauchleitung gegen ein unbeabsichtigtes Herausziehen aus der im Kartuschenadapter oder in der Kartusche vorgesehenen Durchgriffsöffnung gesichert am Kartuschenadapter oder der Kartusche befestigen zu können, wird das Schlauchanschlusselement durch die Einstecköffnung hindurch in den quer zur Längsachse des Kartuschenadapters oder der Kartusche angeordneten Einsteckschlitz eingeführt, um von dort in die Durchgriffsöffnung überführt zu werden. In dieser Durchgriffsöffnung ist ein Aufnahme-Absatz oder eine Aufnahmeschräge vorgesehen. Somit kann die der Durchgriffsöffnung zugeordnete zumindest eine Schlauchleitung durch die Einstecköffnung hindurch über den Einsteckschlitz in die Durchgriffsöffnung derart eingeführt werden, dass das Schlauchanschlusselement mit einer Querschnittserweiterung gegen ein Abziehen der Schlauchleitung gesichert am Aufnahme-Absatz oder an der Aufnahmeschräge anliegt. Die zumindest eine Schlauchleitung wird also von der quer zur Längsachse des Kartuschenadapters oder der Kartusche hin offen ausgebildeten Einstecköffnung aus in den Einsteckschlitz eingeführt, der auf seiner der Einstecköffnung abgewandten Seite in der Durchgriffsöffnung mündet. Dieser Durchgriffsöffnung ist die Schlauchanschlusselement-Aufnahme im Kartuschenadapter oder in der Kartusche zugeordnet, die einen diese Durchgriffsöffnung begrenzenden Aufnahme-Absatz oder eine Aufnahmeschräge aufweist. Die durch die Einstecköffnung in den Einsteckschlitz eingeführte Schlauchleitung lässt sich somit von der innenliegenden oder am Umfang des Kartuschenadapters oder der Kartusche vorgesehenen Einstecköffnung aus in die zugeordnete Durchgriffsöffnung derart einführen, dass das die Durchgriffsöffnung durchsetzende Schlauchanschlusselement dieser zumindest einen Schlauchleitung mit einer Querschnittserweiterung gegen ein unbeabsichtigtes Abziehen der Schlauchleitung von der Kartusche oder dem Kartuschenadapter gesichert am Aufnahmeabsatz oder an der Aufnahmeschräge anliegt.

Bei dieser vergleichsweise platzsparend auszugestaltenden Ausführungsform gemäß der Erfindung wird die Schlauchleitung gegen ein unbeabsichtigtes Abziehen in die der Kartusche oder dem Kartuschenadapter abgewandte Richtung wirkunsvoll gesichert.

Ein weiterer Vorschlag zur Lösung der oben gestellten Aufgabe sieht bei einer Sanitärarmatur der eingangs erwähnten Art -, bei der das Schlauchanschlusselement der mindestens einen Schlauchleitung in einer Halteposition eine Durchgriffsöffnung am Armaturengehäuse durchsetzt, vor, dass in der zumindest einen Durchgriffsöffnung ein Einsteckschlitz mündet, der an einem von der Durchgriffsöffnung beabstandeten Schlitzende oder Schlitz-Teilbereich eine Einstecköffnung hat, die einen im Vergleich zur Durchgriffsöffnung vergrößerten Öffnungsquerschnitt aufweist und/oder die randseitig offen ausgebildet ist, dass der zumindest einen Durchgriffsöffnung eine Schlauchanschlusselement-Aufnahme zugeordnet ist, die einen die Durchgriffsöffnung begrenzenden Aufnahme-Absatz oder eine Aufnahmeschräge aufweist, und dass die der Durchgriffsöffnung zugeordnete Schlauchleitung durch die Einstecköffnung hindurch über den Einsteckschlitz in die Durchgriffsöffnung derart einführbar ist, dass das Schlauchanschlusselement mit einer Querschnittserweiterung gegen ein Abziehen der Schlauchleitung gesichert am Aufnahmeabsatz oder an der Aufnahmeschräge gehalten ist und mit seinem eine Schlauchöffnung umgrenzenden freien Stirnende an dem die zugeordnete Zulauföffnung umgrenzenden Randbereich der Kartusche oder des Kartuschenadapters anliegt Auch die gemäß diesem Erfindungsvorschlag ausgebildete Sanitärarmatur weist ein Armaturengehäuse auf, das einen Gehäuse-Innenraum hat, in dem eine Kartusche oder ein, in einer Kartuschenaufnahme eine Kartusche aufweisender Kartuschenadapter in Einsetzrichtung bis zu einem Einsetzanschlag eingesetzt ist. Dieser Kartuschenadapter weist eine Kartuschenaufnahme auf, die zum Einsetzen einer Kartusche bestimmt ist. Durch die Kartusche ist zumindest ein Fluid geführt, das die Kartusche von mindestens einer Zulauföffnung zu wenigstens einer Auslauföffnung durchströmt. Mit Hilfe der Kartusche kann das gewünschte Fluid ausgewählt, die benötigte Menge eingeregelt und/oder dessen Temperatur oder dergleichen Fluideigenschaften, beispielsweise durch Zumischen von Kalt- und Warmwasser, bestimmt werden. Dabei wird das wenigstens eine Fluid jeweils mittels einer Schlauchleitung an die Kartusche herangeführt. Um das von der zumindest einen Schlauchleitung kommende Fluid in die, gegebenenfalls auch in einem Kartuschenadapter befindliche Kartusche einströmen zu lassen, liegt die mindestens eine Schlauchleitung mit ihrem Schlauchanschlusselement am Kartuschenadapter oder an der Kartusche an. Dabei durchsetzt das Schlauchanschlusselement der mindestens einen Schlauchleitung in einer Halteposition eine Durchgriffsöffnung, die bei der Sanitärarmatur gemäß diesem Erfindungsvorschlag am Armaturengehäuse vorgesehen ist. In der zumindest einen Durchgriffsöffnung mündet ein Einsteckschlitz, der an einem von der Durchgriffsöffnung beabstandeten Schlitzende oder Schlitz-Teilbereich eine Einstecköffnung hat. Diese Einstecköffnung kann einen im Vergleich zur Durchgriffsöffnung vergrößerten Öffnungsquerschnitt aufweisen und zusätzlich oder stattdessen randseitig offen ausgebildet sein. Ist die Einstecköffnung demgegenüber geschlossen ausgebildet und weist lediglich einen im Vergleich zur Durchgriffsöffnung vergrößerten Öffnungsquerschnitt auf, sind diese Einstecköffnung, die Durchgriffsöffnung und der die beiden Öffnungen miteinander verbindende Einsteckschlitz schlüssellochförmig ausgebildet.

Der zumindest einen Durchgriffsöffnung ist eine Schlauchanschlusselement-Aufnahme zugeordnet, die einen die Durchgriffsöffnung begrenzenden Aufnahme-Absatz oder eine Aufnahmeschräge aufweist. Dabei ist die der Durchgriffsöffnung zugeordnete Schlauchleitung durch die Einstecköffnung hindurch über den Einsteckschlitz in die Durchgriffsöffnung derart einführbar, dass das Schlauchanschlusselement mit einer Querschnittserweiterung entgegen der Durchsteckrichtung gesichert am Aufnahme-Absatz oder an der Aufnahmeschräge anliegt.

Um die zumindest eine Durchgriffsöffnung am Armaturengehäuse auszubilden, ist es vorteilhaft, wenn am Gehäuseinnenumfang des Armaturengehäuses wenigstens ein Halteflansch in den Gehäuseinnenraum vorsteht, welcher Halteflansch zumindest eine der Durchgriffsöffnungen sowie den ihr zugeordneten Einsteckschlitz mit Einstecköffnung aufweist.

Dabei kann die Querschnittserweiterung an dem Schlauchanschlusselement der zumindest einen Schlauchleitung als Ringabsatz oder als Ringflansch ausgebildet sein.

Um das am Kartuschenadapter oder an der Kartusche gehaltene Schlauchanschlusselement auch gegen ein unbeabsichtigtes Verschieben im Bereich der Durchgriffsöffnung zu sichern und um das Schlauchanschlusselement der zumindest einen Schlauchleitung in der gewünschten Position am Kartuschenadapter oder an der Kartusche zu halten, ist es vorteilhaft, wenn der Ringflansch oder dergleichen Querschnittserweiterung in seiner/ihrer Außenkontur an den lichten Querschnitt der Schlauchanschlusselement-Aufnahme formangepasst ist.

Dabei sieht eine bevorzugte Ausführungsform gemäß der Erfindung vor, dass das Schlauchanschlusselement derart an der Kartusche, am Kartuschenadapter oder am Halteflansch gehalten ist, dass die der Schlauchleitung abgewandte Stirnfläche des Ringflansches etwa in oder unterhalb der durch die Innenseite der Kartusche, des Kartuschenadapters oder des Halteflansches gebildeten Ebene angeordnet ist.

Demgegenüber sieht eine andere vorteilhafte Ausführungsform gemäß der Erfindung vor, dass das Schlauchanschlusselement an seinem freien Ende kugel- oder tropfenförmig ausgebildet ist. Ist das an einer zugeordneten Zulauföffnung der Kartusche anliegende freie Ende des Schlauchanschlusselements kugel- oder tropfenförmig ausgebildet, können in diesem gelenkkugelartigen Bereich zwischen dem Schlauchanschlusselement einerseits und dem die Zulauföffnung umgrenzenden Bereich der Kartusche andererseits gewisse Fehlstellungen des Schlauchanschlusselements oder auch Fertigungstoleranzen ausgeglichen werden.

Ein solcher Ausgleich von Fehlstellungen oder Fertigungstoleranzen wird noch erleichtert, wenn die Aufnahmeschräge zur Aufnahme des kugel- oder tropfenförmigen Schlauchanschlusselements kugelkalottenförmig ausgebildet ist. Auf diese Weise können das Schlauchanschlusselement einerseits und die Aufnahmeschräge der Schlauchanschlusselement-Aufnahme im Bereich der Durchgriffsöffnung andererseits kugelgelenkartig zusammenwirken.

Um die vom Schlauchanschlusselement umgrenzte Schlauchöffnung einerseits und die zugeordnete Zulauföffnung an der Kartusche andererseits miteinander verbinden zu können und um in diesem Bereich der Sanitärarmatur unbeabsichtigte Leckagen zu vermeiden, ist es vorteilhaft, wenn das Schlauchanschlusselement und die benachbarte Zulauföffnung der Kartusche mittels einer Ringdichtung abgedichtet sind.

Dabei lässt sich die Position der Ringdichtung auf einfache Weise festlegen, wenn diese Ringdichtung bereichsweise in die zugeordnete Schlauchanschlusselement-Aufnahme eintaucht, derart, dass die Ringdichtung in der Schlauchanschlusselement-Aufnahme gesichert ist.

Wenn aus der erfindungsgemäßen Sanitärarmatur Fluide entnommen werden sollen, die sich in ihren Fluideigenschaften voneinander unterscheiden und wenn aus der erfindungsgemäßen Sanitärarmatur über Warm- und Kaltwasser hinaus wahlweise auch kochend heißes Wasser oder karbonisiertes Wasser entnommen werden soll, ist es vorteilhaft, wenn an der Kartusche, am Kartuschenadapter oder am Armaturengehäuse zumindest zwei Schlauchleitungen gehalten sind.

Um die Flüssigkeitsführung zwischen dem Schlauchanschlusselement einerseits und der Kartusche andererseits nach außen hin flüssigkeitsdicht auszugestalten, und um Leckageströme im Anschlussbereich zwischen dem Schlauchanschlusselement und der benachbarten Zulauföffnung der Kartusche zu vermeiden, kann es vorteilhaft sein, wenn das Schlauchanschlusselement und die benachbarte Zulauföffnung der Kartusche mittels einer Ringdichtung radial und/oder axial abgedichtet sind.

Eine axiale Abdichtung zwischen dem Schlauchanschlusselement und der benachbarten Kartusche lässt sich auf einfache Weise bewerkstelligen, wenn zwischen dem die Schlauchöffnung umgrenzenden freien Stirnende des Schlauchanschlusselements und dem die zugeordnete Zulauföffnung umgrenzenden benachbarten Randbereich der Kartusche ein als Ringdichtung ausgebildeter Dichtring eingespannt ist. Bei dieser Ausführung liegt das freie Stirnende des Schlauchanschlusselements mit Hilfe des Dichtrings an dem die zugeordnete Zulauföffnung umgrenzenden benachbarten Randbereich der Kartusche an.

Um zusätzlich oder stattdessen eine radiale Abdichtung zwischen dem Schlauchanschlusselement und dem die zugeordnete Zulauföffnung umgrenzenden benachbarten Randbereich der Kartusche herzustellen, ist in einem weiteren vorteilhaften Ausführungsbeispiel gemäß der Erfindung vorgesehen, dass die Kartusche eine als Schlauchanschlusselement-Aufnahme ausgebildete Aufnahmehöhlung aufweist, und dass zwischen dem Schlauchanschlusselement einerseits und der die Aufnahmehöhlung umgrenzenden Umfangswandung der Kartusche andererseits die Ringdichtung vorgesehen ist.

Weiterbildungen gemäß der Erfindung ergeben sich aus der nachfolgenden Figurenbeschreibung in Verbindung mit den Ansprüchen sowie der Zeichnung. Nachstehend wird die Erfindung anhand bevorzugter Ausführungsbeispiele noch näher beschrieben.

Es zeigt:
- Fig. 1:: das Armaturengehäuse einer Sanitärarmatur in einem Längsschnitt im Bereich einer Kartusche, wobei die Kartusche in einen im Armaturengehäuse befindlichen Kartuschenadapter eingesetzt ist, an welchem Kartuschenadapter zumindest zwei Schlauchleitungen gehalten sind,
- Fig. 2:: das bereits in Fig. 1 gezeigte Armaturengehäuse in einer längsgeschnittenen Perspektivdarstellung mit Blick auf die von der Kartusche befreite Kartuschenaufnahme des Kartuschenadapters,
- Fig. 3:: den Kartuschenadapter aus den Fig. 1 und 2 in einer längsgeschnittenen Perspektivdarstellung,
- Fig. 4:: den Kartuschenadapter aus den Fig. 1 bis 3 in einer Draufsicht auf dessen Kartuschenaufnahme,
- Fig. 5:: den Kartuschenadapter aus den Fig. 1 bis 4 in einer Perspektivdarstellung mit Blick auf die der Kartuschenaufnahme abgewandte Unterseite des Kartuschenadapters,
- Fig. 6:: das Armaturengehäuse einer weiteren Sanitärarmatur in einem Längsschnitt im Bereich einer Kartusche, die in dem Gehäuse-Innenraum des Armaturengehäuses unmittelbar und ohne Zuhilfenahme eines Kartuschenadapters eingesetzt ist, wobei an der Kartusche zumindest zwei Schlauchleitungen gehalten sind,
- Fig. 7:: das Armaturengehäuse einer anderen Auslaufarmatur in einer längsgeschnittenen Perspektivdarstellung, wobei in Fig. 7 ein am Armaturengehäuse gehaltenes Schlauchanschlusselement einer Schlauchleitung erkennbar ist,
- Fig. 8:: das ebenfalls in einer längsgeschnittenen Perspektivdarstellung gezeigte Armaturengehäuse aus Fig. 7 ohne das daran gehaltene Schlauchanschlusselement,
- Fig. 9:: das Armaturengehäuse aus den Fig. 7 und 8 mit dem daran gehaltenen Schlauchanschlusselement in einer längsgeschnittenen Detaildarstellung, wobei das Schlauchanschlusselement mit seinem, eine Schlauchöffnung umgrenzenden freien Stirnende an dem eine zugeordnete Zulauföffnung umgrenzenden Randbereich eines Kartuschenadapters flüssigkeitsdicht anliegt,
- Fig. 10:: ein gemäß dem Stand der Technik ausgebildetes Armaturengehäuse, wobei im Gehäuseinnenraum des Armaturengehäuses ein Kartuschenadapter eingesetzt ist, der ein am Armaturengehäuse gehaltenes Schlauchanschlusselement einer Schlauchleitung mit einer Kartusche verbindet, die in eine Kartuschenaufnahme des Kartuschenadapters einsetzbar ist,
- Fig. 11:: das gemäß dem Stand der Technik ausgebildete Armaturengehäuse in einer längsgeschnittenen Detailansicht im Bereich eines in den Gehäuseinnenraum des Armaturengehäuses radial vorstehenden Schlauchhalters, und
- Fig. 12:: das Armaturengehäuse einer Sanitärarmatur in einem weiteren längsgeschnittenen Ausführungsbeispiel im Bereich der Kartusche, wobei zwischen dem Schlauchanschlusselement und der Umfangswandung einer als Schlauchanschlusselement-Aufnahme der Kartusche ausgebildeten Aufnahmehöhlung eine hier radial abdichtende Ringdichtung vorgesehen ist.

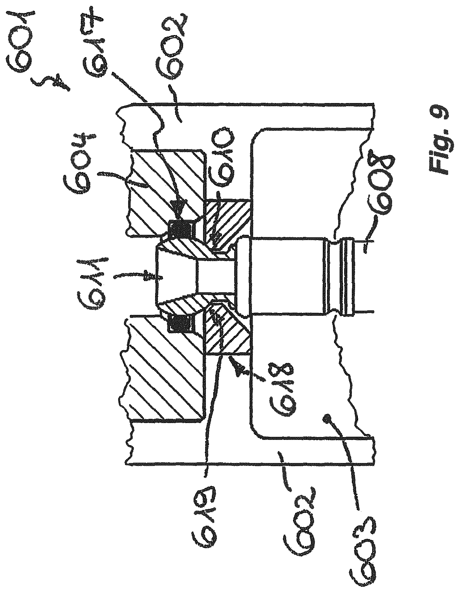

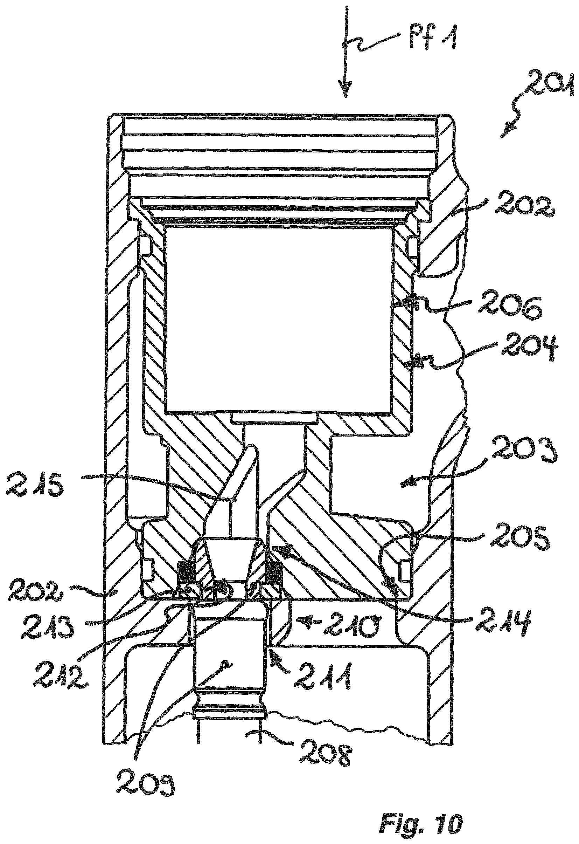

In den Fig. 9 und 10 ist eine Sanitärarmatur 201 gemäß dem vorbekannten gattungsbildenden Stand der Technik dargestellt. Die aus dem Stand der Technik vorbekannte Sanitärarmatur 201 weist ein als Hohlkörper ausgebildetes Armaturengehäuse 202 auf, in dessen Gehäuse-Innenraum 203 ein Kartuschenadapter 204 in Einsetzrichtung Pf1 bis zu einem Einsetzanschlag 205 eingesetzt ist. Der Kartuschenadapter 204 weist eine als Sackloch ausgebildete Kartuschenaufnahme 206 auf, die zum Einsetzen einer hier nicht weiter dargestellten Kartusche bestimmt ist. Durch die Kartusche ist wenigstens ein Fluid, insbesondere Kalt- und/oder Warmwasser, von mindestens einer Zulauföffnung der Kartusche aus zu wenigstens einer Auslauföffnung hin durchführbar, wobei die Menge oder zumindest eine Eigenschaft des Fluids, beispielsweise dessen Temperatur, in der Kartusche eingeregelt werden kann.

Dabei wird das wenigstens eine Fluid über mindestens eine Schlauchleitung 208 an die Kartusche der vorbekannten Sanitärarmatur 201 herangeführt. Diese Schlauchleitung 208 liegt mit einem Schlauchanschlusselement 209 der Schlauchleitung 208 derart am Kartuschenadapter 204 an, dass das in der zumindest einen Schlauchleitung 208 geführte Fluid über das Schlauchanschlusselement 209 und den Kartuschenadapter 204 in die Kartusche geleitet werden kann. Im Gehäuse-Innenraum 203 des Armaturengehäuses 202 steht dazu zumindest ein Schlauchhalter 210 vor, der an den Gehäuseinnenumfang des Armaturengehäuses 202 angeformt ist. Dieser zumindest eine Schlauchhalter 210 wird von wenigstens einer Einführöffnung 211 durchsetzt, durch die jeweils eine Schlauchleitung 208 einführbar ist. Am Umfang des Schlauchanschlusselements 209 ist eine umlaufende Haltenut 212 vorgesehen, in die nach dem Einfädeln der Schlauchleitung 208 in die Einführöffnung 211 ein Sprengring, ein Halteclip 213 oder dergleichen Axialsicherung einsetzbar ist. Diese Axialsicherung sichert die Schlauchleitung 208 und deren Schlauchanschlusselement 209 gegen ein Herausziehen aus der Einführöffnung 211. Das Schlauchanschlusselement 209 der zumindest einen Schlauchleitung 208 liegt am Kartuschenadapter 204 im Bereich der Kanalzulauföffnung 214 eines Durchströmkanals 215 an, welcher Durchströmkanal 215 zu einer Zulauföffnung der Kartusche führt. Das Einarbeiten der Einführöffnungen 211 in das Armaturengehäuse 202, und das Abdichten zwischen dem Schlauchanschlusselement 209 und dem Kartuschenadapter 204 sowie zwischen dem Kartuschenadapter 204 und der Kartusche ist mit einem erheblichen Aufwand verbunden.

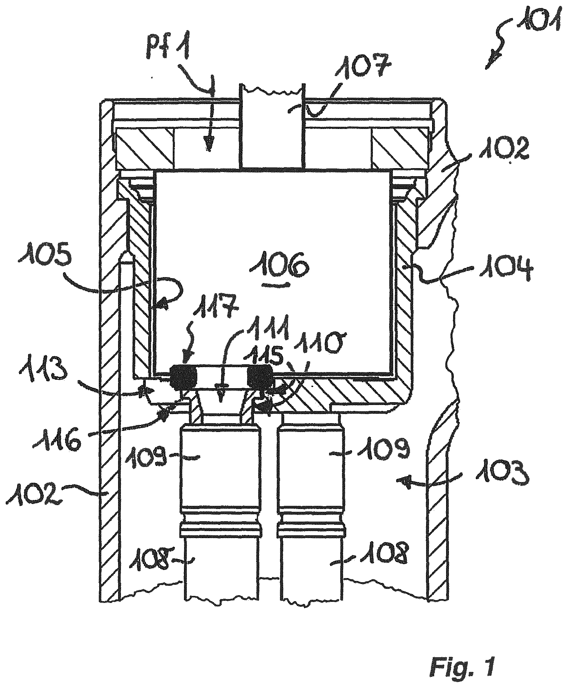

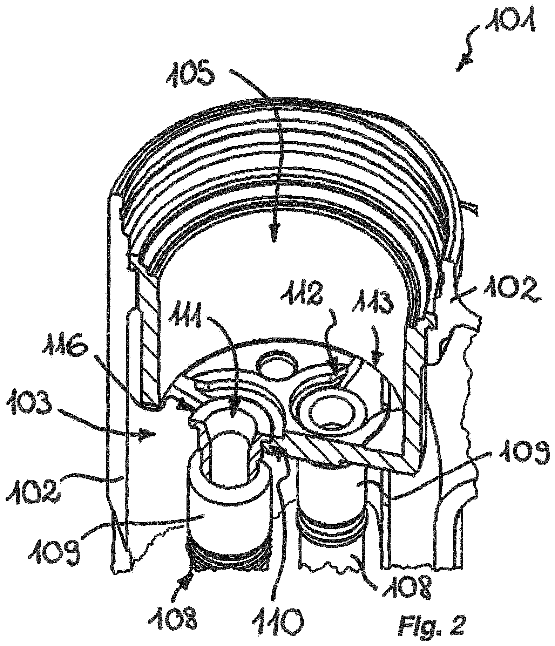

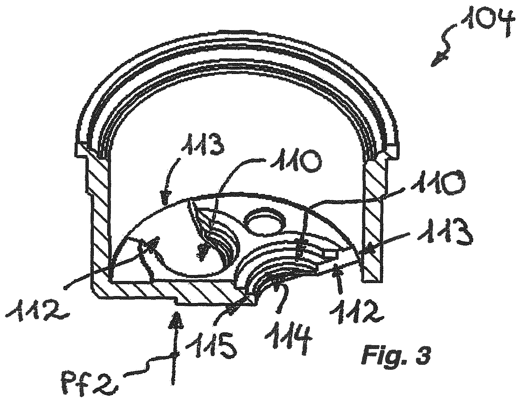

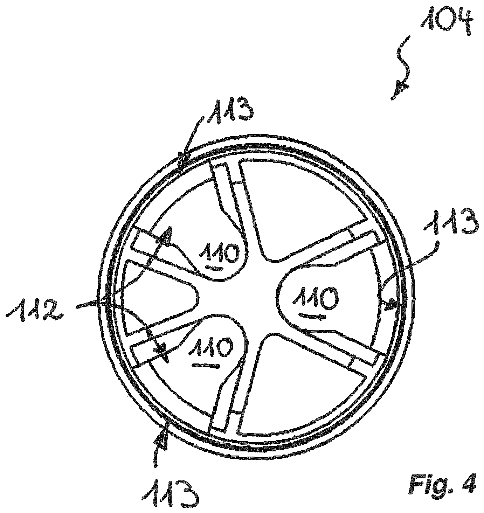

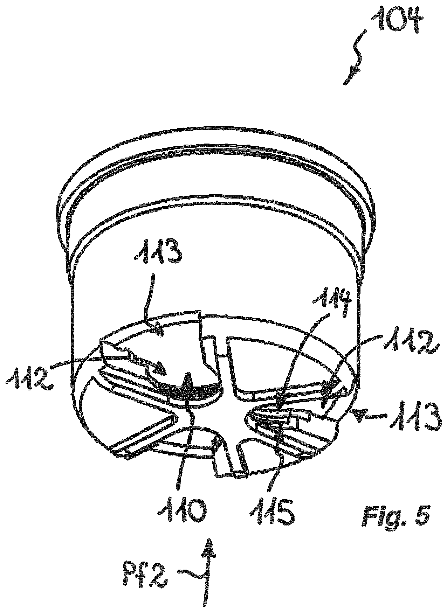

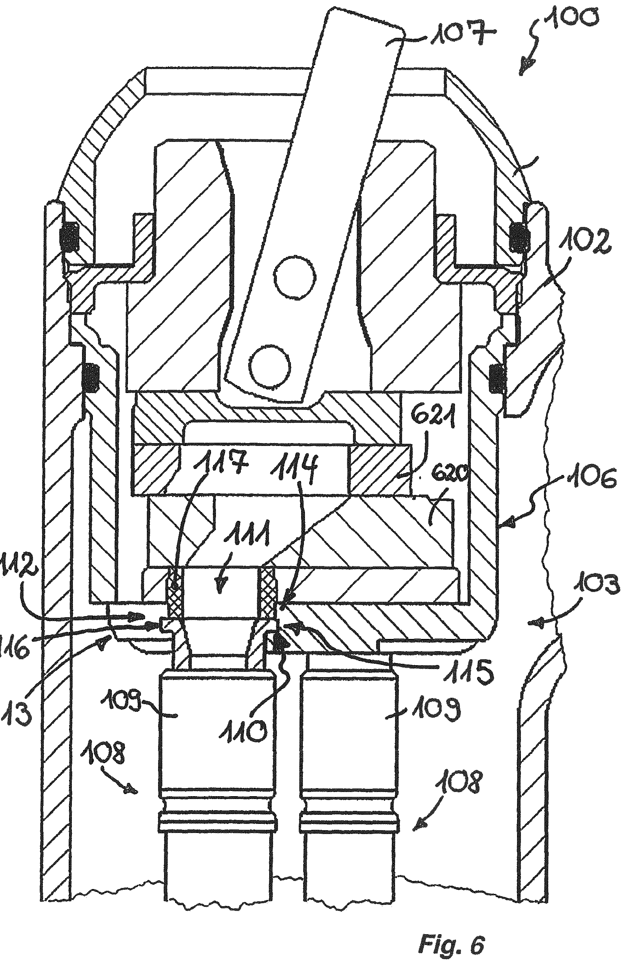

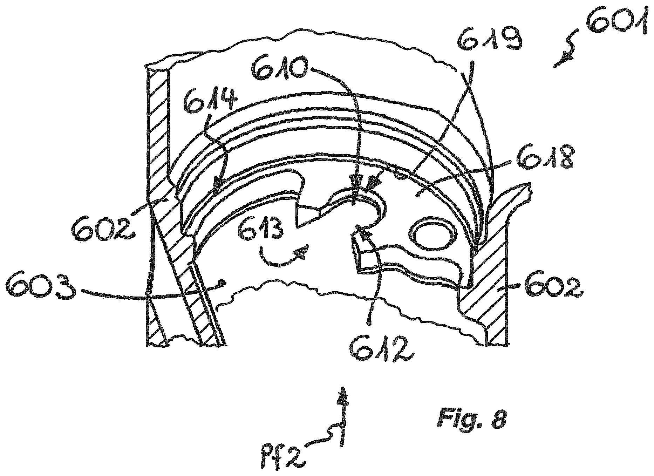

In den Fig. 1 bis 5, 6, 7 bis 9 und 12 sind im Wesentlichen drei verschiedene Ausführungen 100, 101 und 601 einer erfindungsgemäßen Sanitärarmatur und einzelne ihrer Bestandteile dargestellt. Die Sanitärarmaturen 100, 101 und 601 weisen ein in den Fig. 1, 6, 7 bis 9 und 12 dargestelltes Armaturengehäuse 102, 602 auf, das einen Gehäuse-Innenraum 103, 603 hat. Während bei der Sanitärarmatur 100 gemäß Fig. 6 die Kartusche 106 unmittelbar in den Gehäuseinnenraum 103 in Einsetzrichtung Pf1 bis zu einem Einsetzanschlag eingesetzt ist, ist in den Gehäuse-Innenraum 103, 603 der Sanitärarmaturen 101, 601 ein Kartuschenadapter 104, 604 eingesetzt, der eine Kartuschenaufnahme 105 zum Einsetzen einer Kartusche 106 aufweist. Durch die Kartusche 106 ist wenigstens ein Fluid, das beispielsweise Warmwasser, Kaltwasser, kochend heißes Wasser und/oder karbonisiertes Wasser sein kann, von mindestens einer Zulauföffnung zu wenigstens einer Auslauföffnung der Kartusche 106 durchführbar. Dabei kann das zumindest eine durchfließende Fluid in der Kartusche beispielsweise hinsichtlich der benötigten Menge und/oder hinsichtlich bestimmter Fluideigenschaften eingeregelt werden. Dazu können in der Kartusche 106 Ventilscheiben 620, 621 oder andere Regelelemente vorgesehen sein, die sich mittels eines aus der Kartusche 106 vorstehenden und beispielsweise mittels einer nicht weiter gezeigten Handhabe betätigbaren Betätigungszapfens 107 bedienen lassen.

Aus den Fig. 1, 6, 7 bis 9 und 12 wird deutlich, dass das wenigstens eine Fluid über mindestens eine flexible Schlauchleitung 108, 608 an die Kartusche 106 herangeführt ist. Diese wenigstens eine Schlauchleitung 108, 608 liegt mit einem Schlauchanschlusselement 109, 609 der Schlauchleitung 108, 608 an der Kartusche 106 oder am Kartuschenadapter 104, 604 flüssigkeitsdicht an.

Wie aus den Fig. 1, 6 und 12 deutlich wird, durchsetzt das Schlauchanschlusselement 109 der mindestens einen Schlauchleitung 108 in der hier dargestellten Halteposition eine Durchgriffsöffnung 110 an der Kartusche 106 (vgl. Fig. 6) oder am Kartuschenadapter 104 (Fig. 1). Dabei liegt das an der Kartusche 106 (vgl. Fig. 6) oder am Kartuschenadapter 104 (vgl. Fig. 1) gehaltene Schlauchanschlusselement 109 der Sanitärarmaturen 100, 101 mit seinem, eine Schlauchöffnung 111 umgrenzenden freien Stirnende, gegebenenfalls unter Vermittlung oder Einspannung einer Ringdichtung 117, an dem eine zugeordnete Zulauföffnung umgrenzenden Randbereich der Kartusche 106 flüssigkeitsdicht an, so dass das in der Schlauchleitung 108 herangeführte Fluid über die Schlauchöffnung 111 und die Zulauföffnung der Kartusche 106 in diese einströmen kann, ohne dass eine Leckage in der Strömungsführung zwischen Schlauchleitung 108 und Kartusche 106 befürchtet werden muss.

Um ein unbeabsichtigtes Herausziehen der Schlauchleitung 108 aus der Verbindung mit der Kartusche 106 oder mit dem Kartuschenadapter 104 zu verhindern, ist das Schlauchanschlusselement 109 der mindestens einen Schlauchleitung 108 in die der Kartusche 106 abgewandte Richtung Pf2 durch die Durchgriffsöffnung 110 gesichert an der Kartusche 106 oder am Kartuschenadapter 104 gehalten.

Der in den Fig. 1 bis 5, 7 bis 9 und 12 näher dargestellte Kartuschenadapter 104 der Sanitärarmatur 101 ist hier etwa topfförmig ausgestaltet und weist am Boden seiner Topfform beispielsweise drei solcher Durchgriffsöffnungen 110 auf. In gleicher Weise ist auch das Kartuschengehäuse der in Fig. 6 gezeigten Kartusche 106 topfförmig ausgestaltet und hat ebenfalls drei solcher Durchgriffsöffnungen 110. Aus einer gesamtschauenden Betrachtung der Fig. 1 bis 5, 6 und 7 bis 9 wird deutlich, dass in jeder dieser Durchgriffsöffnungen 110 jeweils ein Einsteckschlitz 112 mündet, der hier zu einer außenseitig am Umfang des Kartuschenadapters 104 oder der Kartusche 106 angeordneten Einstecköffnung 113 hin offen ausgebildet ist. Der hier topfförmig ausgestaltete Kartuschenadapter 104 oder das ebenfalls topfförmig ausgestaltete Kartuschengehäuse der Kartusche 106 weist am Boden seiner Topfform beispielsweise drei solcher Durchgriffsöffnungen 110 auf. Jeder dieser Durchgriffsöffnungen 110 ist eine Schlauchanschlusselement-Aufnahme 114 zugeordnet, die einen die Durchgriffsöffnung 110 begrenzenden Aufnahme-Absatz 115 aufweist. Somit kann die einer der Durchgriffsöffnungen 110 zugeordnete Schlauchleitung 108 durch die Einstecköffnung 113 hindurch über den Einsteckschlitz 112 in die Durchgriffsöffnung 110 derart eingeführt werden, dass das Schlauchanschlusselement 109 mit einer hier als stirnseitiger Ringflansch 116 ausgebildeten Querschnittserweiterung entgegen der Durchsteckrichtung Pf2 gesichert am Aufnahme-Absatz 115 anliegt. Um das Schlauchanschlusselement 109 auch in seiner Position quer zur Pfeilrichtung Pf2 zu sichern, ist der Ringflansch 116 in seiner Außenkontur an den lichten Querschnitt der Schlauchanschlusselement-Aufnahme 114 formangepasst.

Aus den Fig. 1 bis 6 wird deutlich, dass das Schlauchanschlusselement 109 der zumindest einen Schlauchleitung 108 derart an der Kartusche 106 oder an dem in den Fig. 1 bis 5 und 7 bis 9 gezeigten Kartuschenadapter 104 gehalten ist, dass die der Schlauchleitung 108 abgewandte Stirnfläche des Ringflansches 116 unterhalb der durch die Innenseite des Kartuschengehäuses oder des Kartuschenadapters 104 gebildeten Ebene angeordnet ist. Auf diese Weise kann eine Ringdichtung 117 beispielsweise in die verbleibende Vertiefung der Schlauchanschlusselement-Aufnahme 114 eintauchen und ein seitliches Verrutschen der Ringdichtung 117 wird verhindert. Damit die Ringdichtung 117 eine ausreichend groß bemessene Ringöffnung aufweisen kann, ist es vorteilhaft, wenn die Schlauchanschlusselement-Aufnahme 114 im Bereich der die Ringdichtung 117 aufnehmenden Vertiefung eine an die Außenkontur der Ringdichtung 117 formangepasste Querschnittserweiterung aufweist. Die Ringdichtung 117 dichtet die Schlauchöffnung 111 am Schlauchanschlusselement 109 einerseits und die gegenüberliegende, damit in Strömungsrichtung fluchtende Zulauföffnung an der Kartusche andererseits nach außen hin ab.

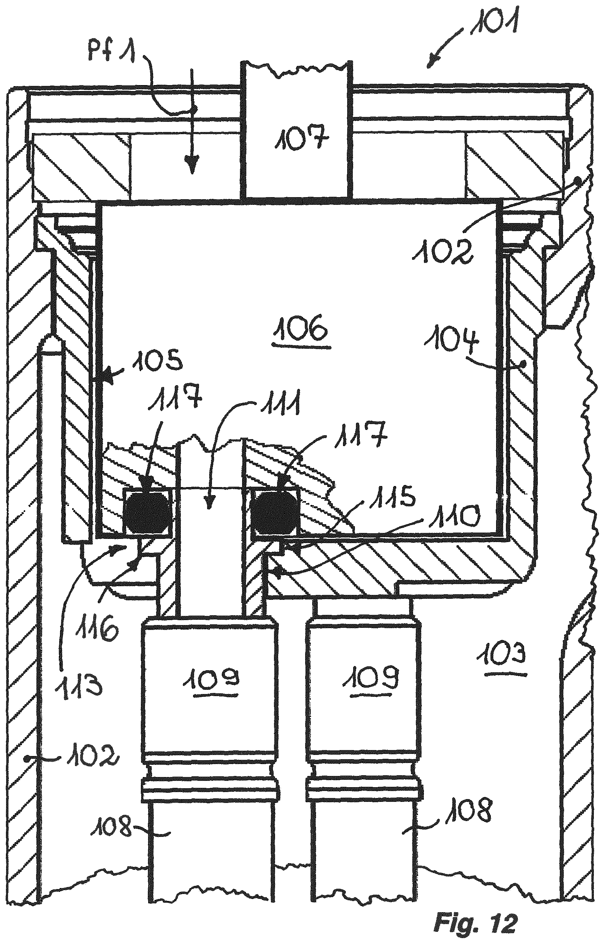

Aus einem Vergleich der Fig. 1 und 12 wird deutlich, dass das Schlauchanschlusselement 109 und die benachbarte Zulauföffnung der Kartusche 106 mittels der Ringdichtung 117 radial und/oder axial abgedichtet sein kann. In Fig. 1 ist erkennbar, dass die hier als Dichtring ausgebildete Ringdichtung 117 zwischen dem die Schlauchöffnung 111 umgrenzenden freien Stirnende des Schlauchanschlusselements 109 und dem die zugeordnete Zulauföffnung umgrenzenden benachbarten Randbereich der Kartusche eingespannt ist und die Flüssigkeitsführung in diesem Bereich nach außen hin axial abdichtet. Demgegenüber weist die Kartusche 106 in Fig. 12 eine als Schlauchanschlusselement-Aufnahme ausgebildete Aufnahmehöhlung auf, wobei zwischen dem Schlauchanschlusselement 109 und der die Aufnahmehöhlung umgrenzenden Umfangswandung der Kartusche 106 die Ringdichtung 117 vorgesehen ist, welche in dem in Fig. 12 gezeigten Ausführungsbeispiel die Flüssigkeitsdichtung nach außen hin radial abdichtet.

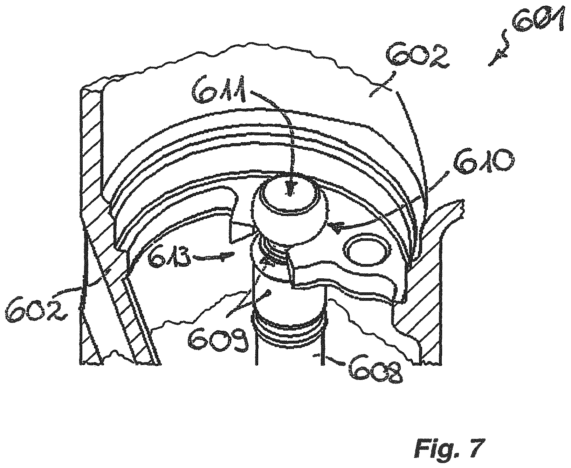

Die in den Fig. 7 bis 9 im Bereich des längsgeschnittenen Gehäuse-Innenraums 603 ihres Armaturengehäuses 602 dargestellte Sanitärarmatur 601 weist zumindest eine Durchgriffsöffnung 610 auf, die am Gehäuseinnenumfang des Armaturengehäuses 602 vorgesehen ist. In dieser zumindest einen Durchgriffsöffnung 610 ist ebenfalls eine Schlauchleitung 608 gegen ein Herausziehen aus der Durchgriffsöffnung 610 entgegen der Durchsteckrichtung Pf2 gesichert gehalten. In der zumindest einen Durchgriffsöffnung 610 mündet ein Einsteckschlitz 612, der an einem von der Durchgriffsöffnung 610 beabstandeten Schlitzende oder Schlitz-Teilbereich eine Einstecköffnung 613 hat, die einen im Vergleich zur Durchgriffsöffnung 610 vergrößerten Öffnungsquerschnitt aufweist und/oder - wie hier - randseitig offen ausgebildet ist. Dazu steht am Gehäuseinnenumfang des Armaturengehäuses 602 wenigstens ein Halteflansch 618 in den Gehäuseinnenraum vor, welcher Halteflansch 618 zumindest eine der Durchgriffsöffnungen 610 sowie den ihr zugeordneten Einsteckschlitz 612 einschließlich der zum Rand des Halteflansches 618 hin offenen Einstecköffnung 613 aufweist.

Der zumindest einen Durchgriffsöffnung 610 ist eine Schlauchanschlusselement-Aufnahme 614 zugeordnet, die einen die Durchgriffsöffnung 610 begrenzenden Aufnahme-Absatz oder eine Aufnahmeschräge 619 aufweist. Die der Durchgriffsöffnung 610 zugeordnete Schlauchleitung 608 kann somit durch die Einstecköffnung 613 hindurch über den Einsteckschlitz 612 in die Durchgriffsöffnung 610 derart eingeführt werden, dass das Schlauchanschlusselement 609 mit einer Querschnittserweiterung entgegen der Durchsteckrichtung Pf2 gesichert am Aufnahme-Absatz oder - wie hier - an der Aufnahmeschräge 619 der Schlauchanschlusselement-Aufnahme 614 anliegt. Diese, am freien Ende des Schlauchanschlusselements 609 vorgesehene Querschnittserweiterung ist hier kugel- oder tropfenförmig ausgebildet. Durch diese tropfenförmige Ausgestaltung der am freien Ende des Schlauchanschlusselements 609 vorgesehenen Querschnittserweiterung und durch die von der Querschnittserweiterung beaufschlagte Aufnahmeschräge 619 lassen sich Fehlstellungen des Schlauchanschlusselements 609 und Fertigungstoleranzen ausgleichen. Dieser Ausgleich von Fehlstellungen und Fertigungstoleranzen wird noch begünstigt, wenn die Aufnahmeschräge 619 eine an die Kugel- oder Tropfenform der am Schlauchelement 609 vorgesehenen Querschnittserweiterung angepasste kugelkalottenförmige Formgebung aufweist. Auch bei der in den Fig. 7 bis 9 dargestellten Sanitärarmatur 601 ist das Schlauchanschlusselement 609 der zumindest einen Schlauchleitung 608 und die benachbarte Zulauföffnung des Kartuschenadapters 604 mittels einer Ringdichtung 617 abgedichtet, wobei auch hier das Schlauchanschlusselement 609 mit seinem die Schlauchöffnung 611 umgrenzenden freien Stirnende an dem die zugeordnete Zulauföffnung umgrenzenden Randbereich des Kartuschenadapters 604 anliegt.

Auch am Armaturengehäuse 602 der Sanitärarmatur 601 sind vorzugsweise zumindest zwei Schlauchleitungen 608 gehalten, die verschiedenen Fluiden, beispielsweise Kaltwasser, Warmwasser, kochend heißem Wasser oder karbonisiertem Wasser, zugeordnet sind.

### Bezugszeichenliste

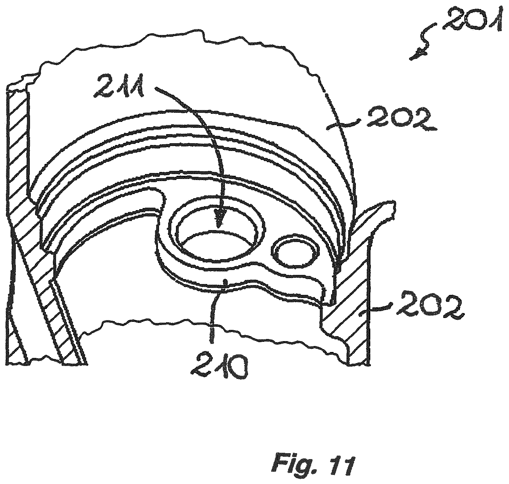

- 100: Sanitärarmatur gemäß Fig. 6
- 101: Sanitärarmatur gemäß den Fig. 1 bis 5
- 102: Armaturengehäuse
- 103: Gehäuse-Innenraum
- 104: Kartuschenadapter
- 105: Kartuschenaufnahme
- 106: Kartusche
- 107: Betätigungszapfen
- 108: Schlauchleitung
- 109: Schlauchanschlusselement
- 110: Durchgriffsöffnung
- 111: Schlauchöffnung
- 112: Einsteckschlitz
- 113: Einstecköffnung
- 114: Schlauchanschlusselement-Aufnahme
- 115: Aufnahme-Absatz
- 116: Ringflansch
- 117: Ringdichtung
- 201: Sanitärarmatur gemäß den Fig. 10 und 11
- 202: Armaturengehäuse
- 203: Gehäuse-Innenraum
- 204: Kartuschenadapter
- 205: Einsetzanschlag
- 206: Kartuschenaufnahme
- 208: Schlauchleitung
- 209: Schlauchanschlusselement
- 210: Schlauchhalter
- 211: Einführöffnung
- 212: Haltenut
- 213: Halteclip
- 214: Kanalzulauföffnung
- 215: Durchströmkanal
- 601: Sanitärarmatur gemäß den Fig. 6 bis 8
- 602: Armaturengehäuse
- 603: Gehäuse-Innenraum
- 604: Kartuschenadapter
- 608: Schlauchleitung
- 609: Schlauchanschlusselement
- 610: Durchgriffsöffnung
- 611: Schlauchöffnung
- 612: Einsteckschlitz
- 613: Einstecköffnung
- 614: Schlauchanschlusselement-Aufnahme
- 617: Ringdichtung
- 618: Halteflansch
- 619: Aufnahmeschräge
- 620: Ventilscheibe
- 621: Ventilscheibe
- Pf1: Einsetzrichtung
- Pf2: Durchgriffsrichtung

## Patentansprüche

1. Sanitärarmatur (100, 101, 601) mit einem Armaturengehäuse (102 602), das einen Gehäuse-Innenraum (103, 603) hat, in den eine Kartusche (106) oder ein Kartuschenadapter (104, 604) mit einer, in einer Kartuschenaufnahme (105) vorgesehenen Kartusche (106) eingesetzt ist,
welche Kartusche (106) wenigstens eine Zulauföffnung hat, die zum Durchführen mindestens eines Fluids durch die Kartusche (106) mit zumindest einer Auslauföffnung der Kartusche (106) verbunden ist,
sowie mit wenigstens einer Schlauchleitung (108, 608) zum Heranführen des mindestens einen Fluids an die Kartusche (106), welche Schlauchleitung (108, 608) zumindest an ihrem der Kartusche (106) zugewandten Schlauchende ein Schlauchanschlusselement (109, 609) aufweist, **dadurch gekennzeichnet, dass** das Schlauchanschlusselement (109, 609) der mindestens einen Schlauchleitung (108, 608) in einer Halteposition an der Kartusche (106) oder am Kartuschenadapter (104, 604) gegen ein Abziehen der Schlauchleitung (108, 608) gesichert gehalten ist, und mit seinem eine Schlauchöffnung (111) umgrenzenden freien Stirnende an dem die zugeordnete Zulauföffnung umgrenzenden Randbereich der Kartusche (106) anliegt.

2. Sanitärarmatur (100, 101) nach Anspruch 1, **dadurch gekennzeichnet, dass** am Kartuschenadapter (104, 604) oder an der Kartusche (106) eine Durchgriffsöffnung (110) vorgesehen ist, dass in der Durchgriffsöffnung (110) ein Einsteckschlitz (112) mündet, der quer zur Längsachse des Kartuschenadapters (104, 604) oder der Kartusche (106) hin an einer Einstecköffnung (113) offen ausgebildet ist, dass der zumindest einen Durchgriffsöffnung (110) eine Schlauchanschlusselement-Aufnahme (114) zugeordnet ist, die einen die Durchgriffsöffnung (110) begrenzenden Aufnahme-Absatz (115) oder eine Aufnahmeschräge aufweist, und dass die der Durchgriffsöffnung (110) zugeordnete Schlauchleitung (108) durch die Einstecköffnung (113) hindurch über den Einsteckschlitz (112) in die Durchgriffsöffnung (110) derart einführbar ist, dass das Schlauchanschlusselement (109) mit einer Querschnittserweiterung gegen ein Abziehen der Schlauchleitung gesichert am Aufnahme-Absatz (115) oder an der Aufnahmeschräge anliegt.

3. Sanitärarmatur (601) nach dem Oberbegriff von Anspruch 1, wobei das Schlauchanschlusselement (609) der mindestens einen Schlauchleitung (608) in einer Halteposition eine Durchgriffsöffnung (610) am Armaturengehäuse (602) durchsetzt, **dadurch gekennzeichnet, dass** in der zumindest einen Durchgriffsöffnung (610) ein Einsteckschlitz (612) mündet, der an einem von der Durchgriffsöffnung (610) beabstandeten Schlitzende oder Schlitz-Teilbereich eine Einstecköffnung (613) hat, die einen im Vergleich zur Durchgriffsöffnung (610) vergrößerten Öffnungsquerschnitt aufweist und/oder die randseitig offen ausgebildet ist, dass der zumindest einen Durchgriffsöffnung (610) eine Schlauchanschlusselement-Aufnahme (614) zugeordnet ist, die einen die Durchgriffsöffnung (610) begrenzenden Aufnahme-Absatz oder eine Aufnahmeschräge (619) aufweist, und dass die der Durchgriffsöffnung (610) zugeordnete Schlauchleitung (608) durch die Einstecköffnung (613) hindurch über den Einsteckschlitz (612) in die Durchgriffsöffnung (610) derart einführbar ist, dass das Schlauchanschlusselement (609) mit einer Querschnittserweiterung gegen ein Abziehen der Schlauchleitung (608) gesichert am Aufnahme-Absatz oder an der Aufnahmeschräge (619) gehalten ist und mit seinem eine Schlauchöffnung umgrenzenden freien Stirnende an dem die zugeordnete Zulauföffnung umgrenzenden Randbereich der Kartusche (106) oder des Kartuschenadapters (604) anliegt.

4. Sanitärarmatur (601) nach Anspruch 3, **dadurch gekennzeichnet, dass** am Gehäuseinnenumfang des Armaturengehäuses (602) wenigstens ein Halteflansch (618) vorsteht, welcher Halteflansch (618) zumindest eine der Durchgriffsöffnungen (610) sowie den ihr zugeordneten Einsteckschlitz (612) mit Einstecköffnung (613) aufweist.

5. Sanitärarmatur (100, 101) nach Anspruch 2, **dadurch gekennzeichnet, dass** die Querschnittserweiterung an dem zumindest einen Schlauchanschlusselement als Ringabsatz oder als Ringflansch (116) ausgebildet ist.

6. Sanitärarmatur (100, 101) nach Anspruch 5, **dadurch gekennzeichnet, dass** der Ringflansch (116) oder dergleichen Querschnittserweiterung in seiner/ihrer Außenkontur an den lichten Querschnitt der Schlauchanschlusselement-Aufnahme (114) formangepasst ist.

7. Sanitärarmatur (100, 101, 601) nach einem der Ansprüche 1 bis 6, **dadurch gekennzeichnet, dass** das Schlauchanschlusselement (109, 609) der zumindest einen Schlauchleitung (108, 608) derart an der Kartusche (106), am Kartuschenadapter (104) oder am Halteflansch (618) gehalten ist, dass die der Schlauchleitung (108, 608) abgewandte Stirnfläche des Ringflansches (116) etwa in oder unterhalb der durch die Innenseite der Kartusche (106), des Kartuschenadapters (104) oder des Halteflansches (618) gebildeten Ebene angeordnet ist.

8. Sanitärarmatur (601) nach einem der Ansprüche 1 bis 7, **dadurch gekennzeichnet, dass** das Schlauchanschlusselement (609) an seinem freien Ende kugel- oder tropfenförmig ausgebildet ist.

9. Sanitärarmatur (601) nach Anspruch 8, **dadurch gekennzeichnet, dass** die Aufnahmeschräge (619) zur Aufnahme des kugel- oder tropfenförmigen Schlauchanschlusselements (609) kugelkalottenförmig ausgebildet ist.

10. Sanitärarmatur (100, 101, 601) nach einem der Ansprüche 1 bis 9, **dadurch gekennzeichnet, dass** das Schlauchanschlusselement (109, 609) und die benachbarte Zulauföffnung der Kartusche (106) mittels einer Ringdichtung (117, 617) abgedichtet sind.

11. Sanitärarmatur (101) nach Anspruch 10 und 2, **dadurch gekennzeichnet, dass** die Ringdichtung (117) bereichsweise in die zugeordnete Schlauchanschlusselement-Aufnahme (114) eintaucht, derart, dass die Ringdichtung (117) in der Schlauchanschlusselement-Aufnahme (114) gesichert ist.

12. Sanitärarmatur (100, 101, 601) nach einem der Ansprüche 1 bis 11, **dadurch gekennzeichnet, dass** an der Kartusche (106), am Kartuschenadapter (104) oder am Armaturengehäuse (602) zumindest zwei Schlauchleitungen (108, 608) gehalten sind.

13. Sanitärarmatur (100, 101, 601) nach einem der Ansprüche 1 bis 12, **dadurch gekennzeichnet, dass** das Schlauchanschlusselement (109) und die benachbarte Zulauföffnung der Kartusche (106) mittels einer Ringdichtung (117) radial und/oder axial abgedichtet sind.

14. Sanitärarmatur (100, 101, 601) nach einem der Ansprüche 5 bis 13, **dadurch gekennzeichnet, dass** zwischen dem die Schlauchöffnung umgrenzenden freien Stirnende des Schlauchanschlusselements (109) und dem die zugeordnete Zulauföffnung umgrenzenden Randbereich der Kartusche (106) ein als Ringdichtung (117) ausgebildeter Dichtring eingespannt ist.

15. Sanitärarmatur (100, 101, 601) nach einem der Ansprüche 10 bis 14, **dadurch gekennzeichnet, dass** die Kartusche (106) eine als Schlauchanschlusselement-Aufnahme ausgebildete Aufnahmehöhlung aufweist, und dass zwischen dem Schlauchanschlusselement (109) und der die Aufnahmehöhlung umgrenzenden Umfangswandung der Kartusche (106) die Ringdichtung (117) vorgesehen ist.

## Claims

1. Sanitary fitting (100, 101, 601) having a fitting housing (102, 602) which has a housing interior (103, 603) into which a cartridge (106) or a cartridge adapter (104, 604) having a cartridge (106) provided in a cartridge receptacle (105) is inserted,
which cartridge (106) has at least one inflow opening which, for the passage of at least one fluid through the cartridge (106), is connected to at least one outflow opening of the cartridge (106),
and having at least one hose line (108, 608) for carrying the at least one fluid to the cartridge (106), which hose line (108, 608) has, at least at its hose end next to the cartridge (106), a hose connection element (109, 609), **characterized in that** the hose connection element (109, 609) of the at least one hose line (108, 608) is retained in a secured manner in a retaining position on the cartridge (106) or on the cartridge adapter (104, 604) so as to prevent the hose line (108, 608) from being pulled off, and bears with its free end face, bordering a hose opening (111), on the peripheral region, bordering the associated inflow opening, of the cartridge (106).

2. Sanitary fitting (100, 101) according to Claim 1, **characterized in that** a passage opening (110) is provided in the cartridge adapter (104, 604) or in the cartridge (106), **in that** a plug-in slot (112) opens into the passage opening (110), said plug-in slot (112) being formed so as to be open transversely toward the longitudinal axis of the cartridge adapter (104, 604) or of the cartridge (106) at a plug-in opening (113), **in that** the at least one passage opening (110) is assigned a hose-connection-element receptacle (114) which has a receiving shoulder (115), bordering the passage opening (110), or a receiving bevel, and **in that** the hose line (108) assigned to the passage opening (110) is able to be introduced into the passage opening (110) through the plug-in opening (113) via the plug-in slot (112) such that the hose connection element (109) bears on the receiving shoulder (115) or on the receiving bevel in a secured manner by way of a cross-sectional expansion so as to prevent the hose line from being pulled off.

3. Sanitary fitting (601) according to the preamble of Claim 1, wherein the hose connection element (609) of the at least one hose line (608) passes, in a retaining position, through a passage opening (610) in the fitting housing (602), **characterized in that** a plug-in slot (612) opens into the at least one passage opening (610), said plug-in slot (612) having, in a slot subregion or at a slot end spaced apart from the passage opening (610), a plug-in opening (613) which has a larger opening cross section compared with the passage opening (610) and/or which is peripherally open, **in that** the at least one passage opening (610) is assigned a hose-connection-element receptacle (614) which has a receiving shoulder bordering the passage opening (610) or a receiving bevel (619), and **in that** the hose line (608) assigned to the passage opening (610) is able to be introduced into the passage opening (610) through the plug-in opening (613) via the plug-in slot (612) such that the hose connection element (609) is retained on the receiving shoulder or on the receiving bevel (619) in a secured manner by way of a cross-sectional expansion so as to prevent the hose line (608) from being pulled off and bears with its free end face, bordering a hose opening, on the peripheral region, bordering the associated inflow opening, of the cartridge (106) or of the cartridge adapter (604).

4. Sanitary fitting (601) according to Claim 3, **characterized in that** at least one retaining flange (618) protrudes from the housing inner circumference of the fitting housing (602), which retaining flange (618) has at least one of the passage openings (610) and the plug-in slot (612), assigned thereto, with a plug-in opening (613) .

5. Sanitary fitting (100, 101) according to Claim 2, **characterized in that** the cross-sectional expansion is formed as an annular shoulder or as an annular flange (116) on the at least one hose connection element.

6. Sanitary fitting (100, 101) according to Claim 5, **characterized in that** the annular flange (116) or similar cross-sectional expansion is dimensionally adapted with its outer contour to the clear cross section of the hose-connection-element receptacle (114).

7. Sanitary fitting (100, 101, 601) according to one of Claims 1 to 6, **characterized in that** the hose connection element (109, 609) of the at least one hose line (108, 608) is retained on the cartridge (106), on the cartridge adapter (104) or on the retaining flange (618) such that the end face, remote from the hose line (108, 608), of the annular flange (116) is arranged approximately in or beneath the plane formed by the inner side of the cartridge (106), of the cartridge adapter (104) or of the retaining flange (618).

8. Sanitary fitting (601) according to one of Claims 1 to 7, **characterized in that** the hose connection element (609) is formed in a spherical or drop-shaped manner at its free end.

9. Sanitary fitting (601) according to Claim 8, **characterized in that** the receiving bevel (619) is in the form of a spherical cap in order to receive the spherical or drop-shaped hose connection element (609).

10. Sanitary fitting (100, 101, 601) according to one of Claims 1 to 9, **characterized in that** the hose connection element (109, 609) and the adjacent inflow opening of the cartridge (106) are sealed off by means of a ring seal (117, 617).

11. Sanitary fitting (101) according to Claim 10 and 2, **characterized in that** the ring seal (117) passes regionally into the associated hose-connection-element receptacle (114) such that the ring seal (117) is secured in the hose-connection-element receptacle (114).

12. Sanitary fitting (100, 101, 601) according to one of Claims 1 to 11, **characterized in that** at least two hose lines (108, 608) are retained on the cartridge (106), on the cartridge adapter (104) or on the fitting housing (602) .

13. Sanitary fitting (100, 101, 601) according to one of Claims 1 to 12, **characterized in that** the hose connection element (109) and the adjacent inflow opening of the cartridge (106) are sealed off radially and/or axially by means of a ring seal (117).

14. Sanitary fitting (100, 101, 601) according to one of Claims 5 to 13, **characterized in that** a sealing ring in the form of a ring seal (117) is clamped in place between the free end face, bordering the hose opening, of the hose connection element (109) and the peripheral region, bordering the associated inflow opening, of the cartridge (106).

15. Sanitary fitting (100, 101, 601) according to one of Claims 10 to 14, **characterized in that** the cartridge (106) has a receiving cavity in the form of a hose-connection-element receptacle, and **in that** the ring seal (117) is provided between the hose connection element (109) and the circumferential wall, bordering the receiving cavity, of the cartridge (106).

## Revendications

1. Robinet sanitaire (100, 101, 601) comportant un corps de robinet (102, 602) qui possède un espace intérieur de corps (103, 603) dans lequel une cartouche (106) ou un adaptateur de cartouche (104, 604) avec une cartouche (106) prévue dans un réceptacle de cartouche (105) est inséré,
laquelle cartouche (106) a au moins une ouverture d'admission qui est reliée à au moins une ouverture d'évacuation de la cartouche (106) pour permettre le passage d'au moins un fluide à travers la cartouche,
et comportant au moins une conduite en tuyau (108, 608) pour permettre l'accès de l'au moins un fluide à la cartouche (106), laquelle conduite en tuyau (108, 608) présente au moins à son extrémité de tuyau orientée vers la cartouche (106) un élément de raccord de tuyau (109, 609), **caractérisé en ce que** l'élément de raccord de tuyau (109, 609) de l'au moins une conduite en tuyau (108, 608) est maintenu dans une position de maintien sur la cartouche (106) ou sur l'adaptateur de cartouche (104, 604), protégé contre un retrait de la conduite en tuyau (108, 608), et est appliqué avec son extrémité frontale libre délimitant une ouverture de tuyau (111) contre la zone périphérique de la cartouche (106) délimitant l'ouverture d'admission associée.

2. Robinet sanitaire (100, 101) selon la revendication 1, **caractérisé en ce que** sur l'adaptateur de cartouche (104, 604) ou sur la cartouche (106) est prévue une ouverture de passage (110), que dans l'ouverture de passage (110) débouche une fente d'insertion (112) qui est ouverte au niveau d'une ouverture d'insertion (113) perpendiculairement à l'axe longitudinal de l'adaptateur de cartouche (104, 604) ou de la cartouche (106), qu'à l'au moins une ouverture de passage (110) est associé un réceptacle d'élément de raccord de tuyau (114) qui présente un ressaut de réception (115) délimitant l'ouverture de passage (110) ou une pente de réception, et que la conduite en tuyau (108) associée à l'ouverture de passage (110) peut être insérée à travers l'ouverture d'insertion (113) via la fente d'insertion (112) dans l'ouverture de passage (110) de telle sorte que l'élément de raccord de tuyau (109) est appliqué sur le ressaut de réception (115) ou sur la pente de réception, protégé contre un retrait de la conduite en tuyau par un élargissement de section transversale.

3. Robinet sanitaire (601) selon le concept générique de la revendication 1, dans lequel l'élément de raccord de tuyau (609) de l'au moins une conduite en tuyau (608) traverse dans une position de maintien une ouverture de passage (610) sur le corps de robinet (602), **caractérisé en ce que** dans l'au moins une ouverture de passage (610) débouche une fente d'insertion (612) qui possède, à une extrémité de fente ou une portion de fente distante de l'ouverture de passage (610), une ouverture d'insertion (613) qui présente une section transversale d'ouverture agrandie par rapport à l'ouverture de passage (610) et/ou qui est ouverte sur le bord, qu'à l'au moins une ouverture de passage (610) est associé un réceptacle d'élément de raccord de tuyau (614) qui présente un ressaut de réception délimitant l'ouverture de passage (610) ou une pente de réception (619), et que la conduite en tuyau (608) associée à l'ouverture de passage (610) peut être insérée à travers l'ouverture d'insertion (613) via la fente d'insertion (612) dans l'ouverture de passage (610) de telle sorte que l'élément de raccord de tuyau (609) est appliqué sur le ressaut de réception ou sur la pente de réception (619), protégé contre un retrait de la conduite en tuyau (608) par un élargissement de section transversale et est appliqué avec son extrémité frontale libre délimitant une ouverture de tuyau contre la zone périphérique de la cartouche (106) ou de l'adaptateur de cartouche (604) délimitant l'ouverture d'admission associée.

4. Robinet sanitaire (601) selon la revendication 3, **caractérisé en ce que** sur le pourtour de corps du corps de robinet (602) dépasse au moins une bride de maintien (618), laquelle bride de maintien (618) comporte au moins une des ouvertures de passage (610) ainsi que la fente d'insertion (612) avec l'ouverture d'insertion (613) qui lui est associée.

5. Robinet sanitaire (100, 101) selon la revendication 2, **caractérisé en ce que** l'élargissement de section transversale sur l'au moins un élément de raccord de tuyau est configuré comme un ressaut annulaire ou comme une bride annulaire (116).

6. Robinet sanitaire (100, 101) selon la revendication 5, **caractérisé en ce que** la bride annulaire (116) ou l'élargissement de section transversale de celle-ci est de forme adaptée, au niveau de son contour extérieur, à la section transversale intérieure du réceptacle d'élément de raccord de tuyau (114).

7. Robinet sanitaire (100, 101, 601) selon une des revendications 1 à 6, **caractérisé en ce que** l'élément de raccord de tuyau (109, 609) de l'au moins une conduite en tuyau (108, 608) est maintenu de telle sorte sur la cartouche (106), sur l'adaptateur de cartouche (104) ou sur la bride de maintien (618) que la face frontale de la bride annulaire (116) éloignée de la conduite en tuyau (108, 608) est disposée à peu près dans ou sous le niveau formé par la face intérieure de la cartouche (106), de l'adaptateur de cartouche (104) ou de la bride de maintien (618).

8. Robinet sanitaire (601) selon une des revendications 1 à 7, **caractérisé en ce que** l'élément de raccord de tuyau (609) est configuré en forme de bille ou de goutte à son extrémité libre.

9. Robinet sanitaire (601) selon la revendication 8, **caractérisé en ce que** la pente de réception (619) est configurée en forme de calotte sphérique pour recevoir l'élément de raccord de tuyau (609) en forme de bille ou de goutte.

10. Robinet sanitaire (100, 101, 601) selon une des revendications 1 à 9, **caractérisé en ce que** l'élément de raccord de tuyau (109, 609) et l'ouverture d'admission voisine de la cartouche (106) sont étanchéifiés au moyen d'un joint annulaire (117, 617).

11. Robinet sanitaire (101) selon la revendication 10 et 2, **caractérisé en ce que** le joint annulaire (117) plonge par endroits dans le réceptacle d'élément de raccord de tuyau (114) associé de telle sorte que le joint annulaire (117) est sécurisé dans le réceptacle d'élément de raccord de tuyau (114).

12. Robinet sanitaire (100, 101, 601) selon une des revendications 1 à 11, **caractérisé en ce qu'**au moins deux conduites en tuyau (108, 608) sont maintenues sur la cartouche (106), sur l'adaptateur de cartouche (104) ou sur le corps de robinet (602).

13. Robinet sanitaire (100, 101, 601) selon une des revendications 1 à 12, **caractérisé en ce que** l'élément de raccord de tuyau (109) et l'ouverture d'admission voisine de la cartouche (106) sont étanchéifiés radialement et/ou axialement au moyen d'un joint annulaire (117).

14. Robinet sanitaire (100, 101, 601) selon une des revendications 5 à 13, **caractérisé en ce qu'**entre la face frontale libre de l'élément de raccord de tuyau (109) délimitant l'ouverture de tuyau et la zone périphérique de la cartouche délimitant l'ouverture d'admission associée est serrée une bague d'étanchéité configurée comme un joint annulaire (117).

15. Robinet sanitaire (100, 101, 601) selon une des revendications 10 à 14, **caractérisé en ce que** la cartouche (106) présente une cavité de réception configurée comme un réceptacle d'élément de raccord de tuyau et que le joint annulaire (117) est prévu entre l'élément de raccord de tuyau (109) et la paroi périphérique de la cartouche (106) délimitant la cavité de réception.
